# EUROPEAN PATENT APPLICATION

(11) **EP 4 151 070 A1**
(43) Date of publication of application: **22.03.2023**
(21) Application number: 22195133.8
(22) Date of filing: 12.09.2022
(51) Int. Cl.: A01D 19/12, G06Q 50/02, B65G 43/00, G05B 19/418

(54) **A SYSTEM, A CENTRAL CONTROL UNIT AND A METHOD FOR AN AGRICULTURAL FACILITY**

(30) Priority: 17.09.2021 SE 2151137
(71) Applicant: Skandia Elevator AB, 534 94 Vara (SE)
(72) Inventor: WIKSTRAND, Gunnar, 531 73 Källby (SE)
(74) Representative: Zacco Sweden AB

(57) **Abstract**

The invention relates to system for an agricultural facility which has a setup of a plurality of interconnected devices which form a plurality of different transportation paths, the system comprises a central control unit configured to be provided remotely from the agricultural facility. The central control unit is configured to calculate, based on received device input data and received connection input data, all the transportation paths that are possible to achieve with the current setup of said plurality of interconnected devices, and transmit to a local control unit transportation path data representative of said calculated transportation paths. The local control unit is configured to select, based on said transportation path data, one or more transportation paths that connect a selected starting device with a selected destination device for enabling transportation of harvested material from the selected starting device to the selected destination device. The invention also relates to a central control unit and to a method.

## Description

### TECHNICAL FIELD

The present invention relates to a system for an agricultural facility which has a setup of a plurality of interconnected devices such as conveyors, elevators, distributors, containers, etc., which form a plurality of different transportation paths for harvested materials such as grains. The invention also relates to a central control unit for such an agricultural facility. Furthermore, the invention relates to a method for use with respect to such an agricultural facility.

### BACKGROUND ART

Within the agricultural industry it is common to process harvested material, such as grains, in a facility which has a plurality of interconnected devices. The processing may require transporting the grains to different devices, such as weight scales, drying devices, temperature regulating device, storage containers, etc. Different types of material are suitably sent to different parts of the facility, and sorting may also be based on the size of the material, for example directing large grains to one destination and smaller grains to another destination. Various transporting devices, such as conveyors and elevators are provided for moving the material from one place to another. Furthermore, there may be provided distributing devices, gates or valve devices for enabling selection between different transport devices depending on the intended destination of the material.

As should be understood, for facilities having a large number of interconnected devices the potential variation in different transportation paths becomes very large. It is not unusual that the devices in a facility can form hundreds or even thousands of possible transportation paths.

When such an agricultural facility with its devices is being set up, a local control unit needs to be programmed with information about which devices are included and how they are interconnected. If a new device is added to the agricultural facility, or if a device is moved or otherwise altered, the service provider needs to visit the agricultural facility to update the programming of the local control unit. Furthermore, such local control unit often have limited calculating capacity. Needless to say, this is a hassle for at least some service providers, and not to mention the disturbance and waiting time this may cause the owner of the agricultural facility.

From the above, it can be understood that it would be desirable to provide a more efficient system for the agricultural facility.

### SUMMARY OF THE INVENTION

An object of the present disclosure is to provide a system for an agricultural facility, which system at least partly alleviates the drawbacks of the prior art. This and other objects, which will become apparent in the following, are accomplished by a system as defined in claim 1. Exemplary embodiments are presented in the dependent claims.

The general inventive concept is based on the realization that by providing the system with a central control unit, which is arranged remotely from the agricultural facility, but which can communicate with the local control unit (and local control units of other agricultural facilities), the agricultural facility may become less dependent on the availability of the service provider, as updates may be effectively processed by the central control unit.

According to a first aspect of the present inventive concept, there is provided a system for an agricultural facility which has a setup of a plurality of interconnected devices such as conveyors, elevators, distributors, containers, etc., which form a plurality of different transportation paths for harvested materials such as grains. The system comprises:
- a local control unit configured to be provided at the agricultural facility,
- a central control unit configured to be provided remotely from the agricultural facility, the central control unit being configured to
   ∘ receive and store device input data representative of the devices in said setup,
   ∘ receive and store connection input data for each individual device, representative of with which other device or devices said individual device is in direct transport-wise communication, and
   ∘ calculate, based on the received device input data and the received connection input data, all the transportation paths that are possible to achieve with the current setup of said plurality of interconnected devices, and transmit to the local control unit transportation path data representative of said calculated transportation paths,
   wherein the local control unit is configured to
   ∘ receive user-selection data including information about a selected starting device and a selected destination device of said plurality of interconnected devices, and
   ∘ select, based on said transportation path data, one or more transportation paths that connect the selected starting device with the selected destination device for enabling transportation of harvested material from the selected starting device to the selected destination device.

The local control unit may also be configured to send instructions to at least some of the devices that form part of the selected transportation path(s), so that a transportation process is initiated and carried out.

By having a central control unit for calculating the different transportation paths and communicating this to the local control unit, the agricultural facility becomes less dependent on the availability of the service provider of the local control unit, for example when an update of the setup has been made and reprogramming is required. Thus, neither the service provider of the local control unit, nor the owner of the agricultural facility needs to invest in a local control unit having greater calculating capacity and processing capability. Instead a central control unit, which is independent of the service providers of the local control unit, may be used. Such a central control unit may suitably be used for communicating with other local control units at other agricultural facilities. Thus, the central control unit may suitably form part of a cloud-based system. Unlike local control units of today which are isolated units, with the present inventive concept the local control unit becomes part of an interconnected system.

A further advantage of the system is that, although the heavy calculation work is handled by the central control unit, it is still the local control unit that determines which transportation path(s) that should be used for each transportation request from a user. In this way, the integrity of the local control unit is maintained. Furthermore, in case of inadvertent loss of Internet connection, the local control unit may still operate as a standalone unit once it has received the transportation path data. Although the central control unit may suitably collect operational data from the local control unit, for example for analytical purposes, such data may be buffered and later collected by the central control unit when the Internet connection has been regained.

The central control unit may include one or more computer servers or other computerized arrangements. The central control unit may include a microprocessor, microcontroller, programmable digital signal processor or another programmable device. The central control unit may also, or instead, include an application specific integrated circuit, a programmable gate array or programmable array logic, a programmable logic device, or a digital signal processor. Where it includes a programmable device such as the microprocessor, microcontroller or programmable digital signal processor mentioned above, the processor may further include computer executable code that controls operation of the programmable device. The local control unit may include similar components.

Since the number of possible transportation paths can be extremely large, as mentioned above, it is advantageous to invest in a powerful central control unit which can make the required calculations of the possible transportation paths, and then serve the local control unit with this information. Once the possible transportation paths are available to the less powerful local control unit, it can select a suitable transportation path for moving material from a selected starting device to a selected destination device. This makes more sense than expecting each different service provider to invest in more powerful local control units in order to reduce downtime and improve efficiency at each agricultural facility. The present inventive concept has effectively decoupled the heavy processing and calculation of the transportation paths from the selection of a suitable transportation path, by separating these two tasks to different control units, i.e. to a central control unit and to a local control units, respectively.

As mentioned above, the central control unit is configured to receive and store connection input data for each individual device, said data being representative of with which other device or devices said individual device is in direct transport-wise communication. It should be understood that by "direct transport-wise communication" is meant that two devices of said setup of a plurality of interconnected devices area in direct communication, i.e. without any intermediately located device of said plurality of interconnected devices. For example, if material can be transported from a first container via a conveyor to a second container, then the first container is in direct transport-wise communication with the conveyor, and the conveyor is in direct transport-wise communication with the second container. The first and the second containers are, however, not in direct transport-wise communication. If we add a third container such that the material can be transported from the first container, via the conveyor and then either to the second container or to the third container, depending on the position of a gate, then the gate will be included in the setup as one of said plurality of interconnected devices. In such case, the conveyor would no longer be considered to be in direct transport-wise communication with the second container. Instead, the conveyor would in such a scenario be in direct transport-wise communication with the gate. The gate will in turn also be in direct transport-wise communication with the second container and the third container.

According to at least one exemplary embodiment, the central control unit receives the device input data and the connection input data from a communication device, such as from a cell phone, a separate computer, etc, which may suitably communicate with the central control unit via the Internet. This is advantageous as a user may enter information into his/her communication unit and smoothly let the central control unit do the calculations of the possible transportation paths, which are then communicated to the local control unit. The user interface on the communication unit may, for instance, be a graphical user interface enabling a user to select (for example drag and drop) symbols or icons representing different devices of the setup at the agricultural facility and the interconnections/relations between those devices.. The communication unit of the user may thus be regarded as representing or comprising a configuration tool.

According to at least one exemplary embodiment, based on the received device input data and the received connection input data, the central control unit is configured to create and store a digital twin of said setup of plurality of interconnected devices that are physically present in the agricultural facility. Thus, the central control unit will provide a virtual reflection of the actual physical setup in the agricultural facility. This provides several advantages. For example, the owner of the agricultural facility may be given access (for example, via a mobile phone, computer, etc.) to at least some of the information relating to the setup at his/her agricultural facility. Suitably, the digital twin is regularly or continuously updated also with respect to process parameters, such that the digital twin when accessed from remote can provide information regarding current status of the different devices (e.g. which devices are active, filling levels, etc.). The digital twin may also be used for logging and analytical purposes. Furthermore, by having a digital twin in the central control unit, recalculations when updates are made (e.g. new device added to the setup at the agricultural facility) will be more efficient than if all the previously received data would need to be processed again.

According to at least one exemplary embodiment, the local control unit is configured to monitor the operational status of those devices that form part of said selected one or more transportation paths, wherein, in case of operational failure of one of the monitored devices, the local control unit is configured to trigger an emergency action. By having the local control unit monitoring the devise involved in a selected transportation path, a fast reaction can be made in case of operation failure. The central control unit may suitably also monitor the operational status of those devices, and may suitably issue notifications/alarms (e.g. to a user interface, such as a mobile phone or computer). However, operational failures that are regarded as critical, is suitably handled by the local control unit. For instance, overfilling of a container may be such an operational failure which would trigger an emergency action by the local control unit. Other operational failures may be loss of functionality, e.g. gates not closing/opening, conveyors stopping or running at wrong speed, etc. The emergency action may include shutting down the device having operational failure. It may also include shutting down adjacent devices, or even all devices of the transportation path in question. Another emergency action may include redirection of the transported material. The emergency action suitably also includes sending a notification to a user interface and/or starting an alarm.

As already discussed above, the system including the central control unit is particularly advantageous when updates are made to the setup at the agricultural facility. This is reflected in the following exemplary embodiment. According to at least one exemplary embodiment, the central control unit is configured to receive supplementary device input data and supplementary connection input data when a new device has been added to said setup of a plurality of interconnected devices and the new device has become interconnected with one or more of the existing devices of said setup, wherein the central control unit is configured to update the stored device input data and the stored connection input data based on the supplementary device input data and the supplementary connection input data, respectively, and to calculate, based on the updated device input data and the updated connection input data all the transportation paths that are possible to achieve with the updated setup of the plurality of interconnected devices, and to transmit to the local control unit updated transportation path data. The supplementary device input data and the supplementary connection input data may be sent from a user interface, such as a computer, mobile phone etc., e.g. by accessing the central control unit with a user profile login associated with the agricultural facility. Alternatively, or additionally, said data may be sent from the local control unit to the central control unit.

As already mentioned above, the central control unit may suitably monitor the operational status of the devices of the setup at the agricultural facility. This is at least partly reflected in the following exemplary embodiment, according to which the central control unit is configured to receive from the local control unit operational data of each one of said plurality of devices and to log said operational data. This may be advantageous for analytical purposes. The logged data may suitably be accessed from remote, e.g. by appropriate user profile login, wherein a user (such as a farmer or personnel of the agricultural central facility) may access the current operational status of the devices. For instance, the user may obtain information regarding which machines are currently in operation, how much grain is held in each container, etc. As mentioned previously, the central control unit may suitably be used for non-critical status access/reports, while the local control unit may be configured to handle critical status events which may need an emergency action to be taken.

According to at least one exemplary embodiment, the central control unit is configured to predict maintenance of individual devices of the setup based on the logged operational data, and to generate maintenance suggestion data containing information of when, or within what time frame, a certain device is suggested for maintenance service or for replacement. This is advantageous, since it reduces the risk of device breakdowns, as appropriate action may be taken in due time, and production may be planned accordingly, reducing the risk of unexpected production stoppage. For instance, a certain device may have a recommended service interval based on the number of hours it has been in operation, or based on a number of repetitions of a certain action, etc. The central control unit may suitably log such operational data and generate the maintenance suggestion data based on the content of the logged operational data. Maintenance suggestion data may, for example, be actively sent from the central control unit to a user interface, and/or may be accessed by logging in to the central control unit.

According to at least one exemplary embodiment, the central control unit operates based on a first data protocol and the local control unit operates based on a different second data protocol, wherein the system comprises a gateway acting as a protocol translator and being configured to translate data transferred between the central control unit and the local control unit. This is advantageous as many service providers of local control units use their own programming language/data protocol. If the system includes several local control units, each at a respective agricultural facility, the system may suitably include a respective gateway for each local control unit, via which the central control unit may communicate with the respective local control unit.

The provision of several local control units in the system is reflected in the following exemplary embodiment. According to at least one exemplary embodiment, said agricultural facility is a first agricultural facility and said local control unit is a first local control unit, wherein the system further comprises a second local control unit configured to be provided at a second agricultural facility. As will be readily understood there may be third, fourth and further local control units at respective agricultural facilities.

According to at least one exemplary embodiment, the central control unit is configured to receive computer software updates and forward said software updates to both the first and the second local control units. This is advantageous if for example a service provider has installed several local control units at respective agricultural facilities, the service provider/retailer/distributor may, via the central control unit update the local control units with the desired software updates. Thus, you do not need to access each local control unit separately. This may, for example, be the case when it is desired to change the operation of a certain device, e.g. change how long a device should continue to operate once an operation is done, such as allowing a conveyor to continue moving for a couple of minutes in order to reduce the risk of large amounts of material residues remaining on the conveyor.

A further advantage of exemplary embodiments that include several local control units at respective agricultural facilities is that operational data that the central control unit has collected from one or more local control units may be used by the central control unit in connection with another local control unit. For instance, the central control unit may include a global self-learning model to improve interpretation of data, improve prediction of maintenance, which may be used in connection with said another local control unit.

According to a second aspect of the present inventive concept, there is provided a central control unit for an agricultural facility which has a setup of a plurality of interconnected devices such as conveyors, elevators, distributors, containers, etc., which form a plurality of different transportation paths for harvested materials such as grains. The central control unit is configured to be provided remotely from the agricultural facility and is configured to
- receive and store device input data representative of the devices in said setup,
- receive and store connection input data for each individual device, representative of with which other device or devices said individual device is in direct transport-wise communication, and
- calculate, based on the received device input data and the received connection input data, all the transportation paths that are possible to achieve with the current setup of said plurality of interconnected devices, and transmit transportation path data representative of said calculated transportation paths to a local control unit which is provided at the agricultural facility.

The calculation step above may comprise: calculate, based on the received device input data and the received connection input data, all the transportation paths that are possible to achieve with the current setup of said plurality of interconnected devices, and transmit transportation path data representative of said calculated transportation paths to a local control unit which is provided at the agricultural facility and which is configured to receive user-selection data including information about a selected starting device and a selected destination device of said plurality of interconnected devices, and select, based on said transportation path data, one or more transportation paths that connect the selected starting device with the selected destination device for enabling transportation of harvested material from the selected starting device to the selected destination device.

The advantages of the central control unit of the second aspect are largely analogous to the advantages of the system of the first aspect, including any embodiment thereof. It should be noted that all features relating to the central control unit in the system of the first aspect, are included in corresponding embodiments of the central control unit of the second aspect. Thus, in exemplary embodiments, the central control unit of the second aspect may be configured to communicate with a local control unit of the type disclosed in connection with the system of the first aspect. Similarly, the central control unit of the second aspect may communicate with and/or be accessible from a user interface as discussed in connection with the system of the first aspect. For instance, some exemplary embodiments of the central control unit of the second aspect are listed below:
In at least one exemplary embodiment, based on the received device input data and the received connection input data, the central control unit may be configured to create and store a digital twin of said setup of plurality of interconnected devices that are physically present in the agricultural facility.

In at least one exemplary embodiment, the central control unit is configured to receive supplementary device input data and supplementary connection input data when a new device has been added to said setup of a plurality of interconnected devices and the new device has become interconnected with one or more of the existing devices of said setup, wherein the central control unit is configured to update the stored device input data and the stored connection input data based on the supplementary device input data and the supplementary connection input data, respectively, and to calculate, based on the updated device input data and the updated connection input data all the transportation paths that are possible to achieve with the updated setup of the plurality of interconnected devices, and transmitting to the local control unit updated transportation path data.

In at least one exemplary embodiment, the central control unit is configured to receive from the local control unit operational data of each one of said plurality of devices and to log said operational data.

In at least one exemplary embodiment, the central control unit is configured to predict maintenance of individual devices of the setup based on the logged operational data, and to generate maintenance suggestion data containing information of when, or within what time frame, a certain device is suggested for maintenance service or for replacement.

In at least one exemplary embodiment, the central control unit is configured to receive computer software updates and forward said software updates to the local control unit, and optionally, to any other local control unit at another agricultural facility.

According to a third aspect of the present inventive concept, there is provided a method for use with respect to an agricultural facility which has a setup of a plurality of interconnected devices such as conveyors, elevators, distributors, containers, etc., which form a plurality of different transportation paths for harvested materials such as grains. The method may be performed by a central control unit. The method comprises, remotely from the agricultural facility,
- receiving and storing device input data representative of the devices in said setup,
- receiving and storing connection input data for each individual device, representative of with which other device or devices said individual device is in direct transport-wise communication, and
- calculating, based on the received device input data and the received connection input data, all the transportation paths that are possible to achieve with the current setup of said plurality of interconnected devices, and transmitting transportation path data representative of said calculated transportation paths to a local control unit which is provided at the agricultural facility.

The calculation step above may comprise: calculating, based on the received device input data and the received connection input data, all the transportation paths that are possible to achieve with the current setup of said plurality of interconnected devices, and transmitting transportation path data representative of said calculated transportation paths to a local control unit which is provided at the agricultural facility and which is configured to receive user-selection data including information about a selected starting device and a selected destination device of said plurality of interconnected devices, and select, based on said transportation path data, one or more transportation paths that connect the selected starting device with the selected destination device for enabling transportation of harvested material from the selected starting device to the selected destination device.

The advantages of the method of the third aspect are largely analogous to the advantages of the central control unit of the second aspect and the system of the first aspect, including any embodiment thereof. It should be noted that all features relating to the central control unit of the second aspect, or the central control unit in the system of the first aspect, are included in corresponding embodiments of the method of the third aspect. Thus, in exemplary embodiments, the method of the third aspect may perform the steps performed by the central control unit of the second aspect, or by the central control unit in the system of the first aspect. For instance, some exemplary embodiments of the method of the third aspect are listed below:
In at least one exemplary embodiment, the method comprises, based on the received device input data and the received connection input data, creating and storing a digital twin of said setup of plurality of interconnected devices that are physically present in the agricultural facility.

In at least one exemplary embodiment, the method comprises
- receiving supplementary device input data and supplementary connection input data when a new device has been added to said setup of a plurality of interconnected devices and the new device has become interconnected with one or more of the existing devices of said setup,
- updating the stored device input data and the stored connection input data based on the supplementary device input data and the supplementary connection input data, respectively, and
- calculating, based on the updated device input data and the updated connection input data all the transportation paths that are possible to achieve with the updated setup of the plurality of interconnected devices, and transmitting to the local control unit updated transportation path data.

In at least one exemplary embodiment, the method comprises receiving from the local control unit operational data of each one of said plurality of devices and to log said operational data.

In at least one exemplary embodiment, the method comprises predicting maintenance of individual devices of the setup based on the logged operational data, and generating maintenance suggestion data containing information of when, or within what time frame, a certain device is suggested for maintenance service or for replacement.

In at least one exemplary embodiment, the method comprises receiving computer software updates and forwarding said software updates to the local control unit, and optionally, to any other local control unit at another agricultural facility.

According to a fourth aspect of the present inventive concept, there is provided a local control unit for an agricultural facility which has a setup of a plurality of interconnected devices such as conveyors, elevators, distributors, containers, etc., which form a plurality of different transportation paths for harvested materials such as grains. The local control unit is configured to be provided at the agricultural facility and is configured to
- receive transportation path data representative of all transportation paths that are possible to achieve with the current setup of said plurality of interconnected devices,
- receive user-selection data including information about a selected starting device and a selected destination device of said plurality of interconnected devices,
- select, based on said transportation path data, one or more transportation paths that connect the selected starting device with the selected destination device for enabling transportation of harvested material from the selected starting device to the selected destination device, and
- send instructions to at least some of the devices that form part of the selected transportation path(s), so that a transportation process is initiated and carried out.

According to a fifth aspect of the present inventive concept, there is provided a method for use with respect an agricultural facility which has a setup of a plurality of interconnected devices such as conveyors, elevators, distributors, containers, etc., which form a plurality of different transportation paths for harvested materials such as grains. The method may be performed by a local control unit. The method comprises
- receiving transportation path data representative of all transportation paths that are possible to achieve with the current setup of said plurality of interconnected devices,
- receiving user-selection data including information about a selected starting device and a selected destination device of said plurality of interconnected devices,
- selecting, based on said transportation path data, one or more transportation paths that connect the selected starting device with the selected destination device for enabling transportation of harvested material from the selected starting device to the selected destination device, and
- sending instructions to at least some of the devices that form part of the selected transportation path(s), so that a transportation process is initiated and carried out.

Generally, all terms used in the claims are to be interpreted according to their ordinary meaning in the technical field, unless explicitly defined otherwise herein. All references to "a/an/the unit, device, component, means, step, etc." are to be interpreted openly as referring to at least one instance of the unit, device, component, means, step, etc., unless explicitly stated otherwise. The steps of any method disclosed herein do not have to be performed in the exact order disclosed, unless explicitly stated. Further features of, and advantages of, the present invention will become apparent when studying the appended claims and the following description. The skilled person realizes that different features of the present invention may be combined to create embodiments other than those described in the following, without departing from the scope of the present invention.

### BRIEF DESCRIPTION OF THE DRAWINGS

Fig. 1 illustrates a system according to at least one exemplary embodiment of the invention.
Fig. 2 illustrates a system according to at least another exemplary embodiment of the invention.

### DETAILED DESCRIPTION

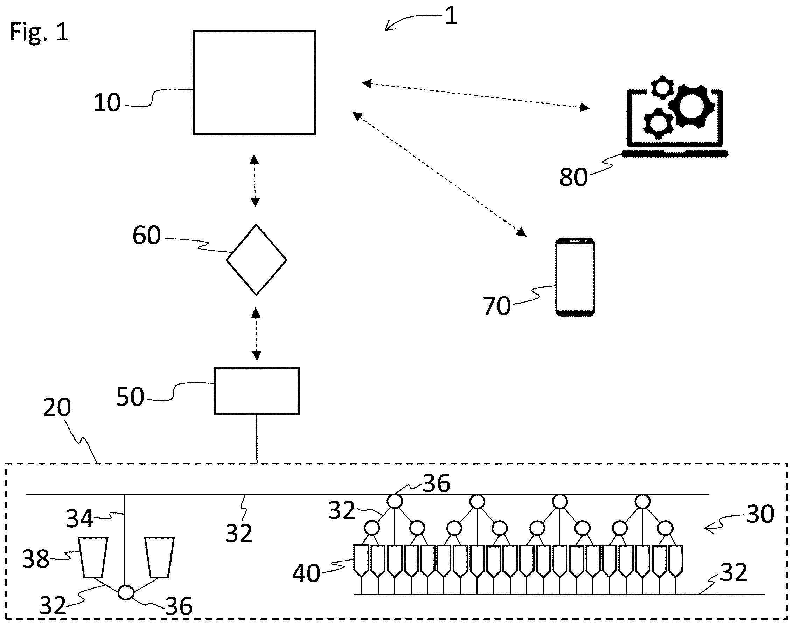

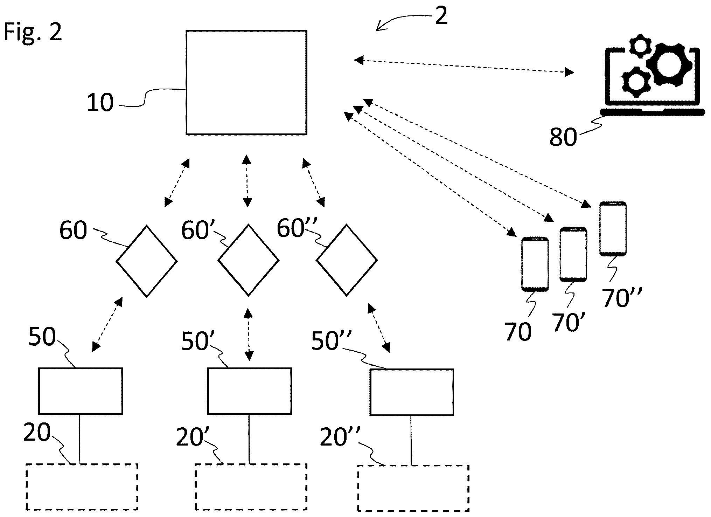

Fig. 1 illustrates a system 1 according to at least one exemplary embodiment of the invention. Thus, this is an example of a system according to the first aspect discussed above. The system comprises a central control unit 10, which is thus an example of a central control unit of the second aspect discussed above. Furthermore, the steps of the method (including any embodiment) of the third aspect discussed above may be performed by the central control unit 10. Similarly the central control unit of the second aspect and the method of the third aspect are also implementable in the system 2 illustrated in Fig. 2.

In Fig. 1, an agricultural facility 20 is schematically illustrated by a dashed rectangle. The agricultural facility 20 includes a setup 30 of a plurality of interconnected devices. In this schematic illustration, the straight lines in the setup may represent conveyors 32, elevators 34 or the like, i.e. devices that are configured to move harvested materials, such as grains. The circles may represent distributing devices 36, valves, gates, or the like, i.e. devices that are configured for selecting a certain path. In Fig. 1, there is also illustrated that the setup 30 includes devices in the form of two large containers 38, such as silos, e.g. for incoming harvested material, and a plurality of other devices, which may be containers 40, dryers, coolers, etc. It should be understood that the setup 30 in Fig. 1 is merely a very schematic illustration for facilitating the discussion of the general inventive concept, and that the possible variation of setups is enormous, as the number of devices, the types of devices, the number of interconnections, etc., is different in different agricultural facilities.

A local control unit 50 is provided at the agricultural facility 20. The local control unit 50 will normally communicate with the devices of the setup 30 by means of cables/wiring. The local control unit 50 may suitably be a PLC (Programmable Logic Controller). A PLC is an industrial computer used to control different electro-mechanical processes for use in automation environments. The local control unit 50 may also receive sensor signals from sensors (not shown) provided at the different devices, such as for instance level sensors, indicating a filling level of a container, weight sensor indicating the weight of the material, etc.

A gateway 60 may be provided to translate the data protocol of the local control unit 50 to the data protocol of the central control unit 10. However, in embodiments in which the central control unit 10 and the local control unit 50 use the same data protocol, the gateway 60 may be omitted.

As should be understood, the central control unit 10 is provided remotely from the agricultural facility 20, and may suitably include or be included in a cloud-based platform. Thus, the central control unit 10 may include or be included in a network of remote servers hosted on the internet.

Information retrievable from the central control unit 10 may suitably be accessed from a suitable user interface 70, such as a mobile phone, computer or the like. A user may thereby, for example, via the Internet access the central control unit 10 and log in with a user profile to get access to information relating to the setup 30 of his/her agricultural facility 20. The central control unit 10 may also be programmed to send notifications, informational updates and/or alarms to the user interface 70. In some exemplary embodiments, the user interface 70 is part of the system 1, in other exemplary embodiments the user interface 70 is not part of the system 1 but may access the system 1, for example as exemplified above.

Fig. 1 also illustrates a separate computer 80 which represents that a software provider (service provider) may send software updates to the central control unit 10 which is then forwarded to the local control unit 50. In some exemplary embodiments, that separate computer 80 is part of the system 1, in other exemplary embodiments it is not part of the system 1 but may be used for accessing the system 1.

The central control unit 10 is configured to receive and store device input data representative of the devices in the setup 30. The device input data may be provided from the user interface 70, or by the service provider (e.g. computer 80). The device input data includes information about the type of device, the model of the device, etc. The central control unit 10 may suitably, based on such information, auto-complete relevant properties and relevant operational features of the respective devices. Alternatively, the received device input data may already include such properties and operational features.

The central control unit 10 is also configured to receive and store connection input data for each individual device, representative of with which other device or devices said individual device in in direct transport-wise communication. The connection input data may be uploaded from the user interface 70, or by the service provider (computer 80). As an example, in Fig. 1 each one of the two large containers 38 is only in direct transport-wise communication with a single respective conveyor 32. Each one of said two conveyors 32 however, are in direct transport-wise communication with the respective large container 38 and with a distributing device 36. Said distributing device 36 is, in addition to the above connections, also in direct transport-wise communication with an elevator 34.

Assuming that one of the two large containers 38 is a starting device from which the harvested material is to be transported, it can be readily understood that there are numerous possible transportation paths available to arrive at the smaller containers 40. In this simple illustration, when one of the smaller containers 40 have been selected as a destination device, then the local control unit 60 can only select one possible transportation path from the large container 38 (starting device) to the selected smaller container 40 (destination device). However, in other setups, there may be several possible paths to one and the same destination device. Thus, depending on the number of devices in the setup 30 and the number of connections to each device, there may be a very large number of potential transportation paths.

The central control unit 10 is configured to calculate, based on the received device input data and the received connection input data, all the transportation paths that are possible to achieve with the current setup of said plurality of interconnected devices, and to transmit to the local control unit 50 transportation path data representative of said calculated transportation paths. It should be noted that "possible transportation paths" may not only be limited to paths between devices that are regarded as normal starting devices and destination devices, but may suitably include any potential paths between any one of the devices in the setup 30.

By defining the relationships between the devices, where each device is a "building block" for one or more transport paths, the central control unit 10 can suitably auto-generate all the possible transportation paths that can be achieved with the current setup 30. It should be understood, that the central control unit 10 may suitably, based on the received device input data and the received connection input data, create a digital twin of the setup 30 of plurality of interconnected devices that are physically present in the agricultural facility 20. In other words, the central control unit 10 may create a virtual representation that may serve as a real-time digital counterpart of the physical devices and processes in the setup 30 at the agricultural facility 20. The digital twin may suitably be accessible by means of said user interface 70.

By already having a digital twin in the central control unit 10, any updates can be made very quickly, and new transportation paths can be quickly calculated and the updated transportation path data can then be sent to the local control unit 50. Thus, the central control unit 10 may be configured to receive supplementary device input data and supplementary connection input data when a new device had been added to the setup 30 and the new device has become interconnected with one or more of the existing devices of said setup 30. In embodiments in which a digital twin has been created in the central control unit 10, a virtual representation of the new device and its connections is quickly added to the central control unit 10. Thus, the central control unit 10 is configured to update the stored device input data and the stored connection input data based on said received supplementary data, and to calculate, based on said updated data all the transportation paths that are possible to achieve with the updated setup. Accordingly, in the case of a digital twin being stored in the central control unit 10, the digital twin will be updated. The code of the digital twin may then be sent to the local control unit 50. Put differently, the central control unit 10 will transmit to the local control unit 50 updated transportation path data.

The local control unit 50 is, in its turn, configured to receive the transportation path data from the central control unit 10, suitably via the gateway 60. The local control unit 50 is also configured to receive user-selection data including information about a selected starting device and a selected destination device of said plurality of interconnected devices. A person may for instance access the local control unit 50 directly to provide said user-selection data. Another possibility is for a person to provide said data via the central control unit 10, e.g. by means of a user interface which is separate from the local control unit 50, such as by means of the illustrated user interface 70 in the form of a mobile phone.

Regardless of how the local control unit 50 receives said user-selection data, it is configured to select, based on said transportation data, one or more transportation paths that connect the selected starting device with the selected destination device for enabling transportation of harvested material from the selected starting device to the selected destination device. The local control unit 50 will then control and send instructions to at least some of the devices that form part of the selected transportation path(s), so that the transportation process is initiated and carried out. The local control unit 50 and some of the devices, or sensors in/at some of the devices, may suitably include various feedback or regulating loops, for different types of control, such as temperature control, speed control, etc.

The local control unit 50 may suitably be configured to monitor the operational status of those devices that form part of said selected one or more transportation paths, wherein, in case of operational failure of one of the monitored devices, the local control unit 50 is configured to trigger an emergency action. As already explained in this disclosure, such an emergency action may for example include activating an alarm, stopping one or more devices, re-directing a transportation flow, etc.

In addition to the local control unit 50 monitoring the operational status of the devices, the central control unit 10 may suitably be configured to receive from the local control unit 50 operational data of each one of the plurality of devices and to log said operational data. This may be used by the central control unit 10 to predict maintenance of individual devices of the setup 30 based on the logged operational data, and to generate maintenance suggestion data containing information of when, or within what time frame, a certain device is suggested for maintenance service or for replacement.

Turning now to the exemplary embodiment of the system 2 in Fig. 2, it can be seen that the central control unit 10 may communicate with a plurality of local control units 50, 50', 50", if appropriate via respective gateways 60, 60', 60". Each local control unit 50, 50', 50" is arranged at a respective agricultural facility 20, 20', 20" having their respective setup of a plurality of interconnected devices (three agricultural facilities 20, 20', 20"are schematically indicated by the three dashed rectangles). Thus, the central control unit 10 may suitably store a plurality of unique digital twins, each digital twin being a virtual representation of the physical setup in a respective agricultural facility 20, 20', 20". A person/user associated with a respective agricultural facility may suitably access the digital twin, by means of a respective user interface 70, 70', 70". As can also be understood from Fig. 2, a single service provider may suitably send software updates (e.g. via computer 80) to the central control unit 10, which will make the appropriate updates in the digital twins, and then distribute the software updates to the local control units 50, 50', 50".

## Claims

1. A system (1, 2) for an agricultural facility (20, 20', 20") which has a setup (30) of a plurality of interconnected devices such as conveyors (32), elevators (34), distributors (36), containers (38, 40), etc., which form a plurality of different transportation paths for harvested materials such as grains, the system comprising:
- a local control unit (50, 50', 50") configured to be provided at the agricultural facility,
- a central control unit (10) configured to be provided remotely from the agricultural facility, the central control unit being configured to
∘ receive and store device input data representative of the devices in said setup,
∘ receive and store connection input data for each individual device, representative of with which other device or devices said individual device is in direct transport-wise communication, and
∘ calculate, based on the received device input data and the received connection input data, all the transportation paths that are possible to achieve with the current setup of said plurality of interconnected devices, and transmit to the local control unit transportation path data representative of said calculated transportation paths,
wherein the local control unit is configured to:
∘ receive user-selection data including information about a selected starting device and a selected destination device of said plurality of interconnected devices,
∘ select, based on said transportation path data, one or more transportation paths that connect the selected starting device with the selected destination device for enabling transportation of harvested material from the selected starting device to the selected destination device, and
∘ send instructions to at least some of the devices that form part of the selected transportation path(s), so that a transportation process is initiated and carried out.

2. The system (1, 2) according to claim 1, wherein, based on the received device input data and the received connection input data, the central control unit (10) is configured to create and store a digital twin of said setup (30) of plurality of interconnected devices that are physically present in the agricultural facility (20, 20', 20").

3. The system (1, 2) according to any one of claims 1-2, wherein the local control unit (50, 50', 50") is configured to monitor the operational status of those devices that form part of said selected one or more transportation paths, wherein, in case of operational failure of one of the monitored devices, the local control unit is configured to trigger an emergency action.

4. The system (1, 2) according to any one of claims 1-3, wherein the central control unit (10) is configured to receive supplementary device input data and supplementary connection input data when a new device has been added to said setup (30) of a plurality of interconnected devices and the new device has become interconnected with one or more of the existing devices of said setup, wherein the central control unit is configured to update the stored device input data and the stored connection input data based on the supplementary device input data and the supplementary connection input data, respectively, and to calculate, based on the updated device input data and the updated connection input data all the transportation paths that are possible to achieve with the updated setup of the plurality of interconnected devices, and transmitting to the local control unit (50, 50', 50") updated transportation path data.

5. The system (1, 2) according to any one of claims 1-4, wherein the central control unit (10) is configured to receive from the local control unit (50, 50', 50") operational data of each one of said plurality of devices and to log said operational data.

6. The system (1, 2) according to claim 5, wherein the central control unit (10) is configured to predict maintenance of individual devices of the setup (30) based on the logged operational data, and to generate maintenance suggestion data containing information of when, or within what time frame, a certain device is suggested for maintenance service or for replacement.

7. The system (1, 2) according to any one of claims 1-6, wherein the central control unit (10) operates based on a first data protocol and the local control unit (50, 50', 50") operates based on a different second data protocol, wherein the system comprises a gateway (60, 60', 60") acting as a protocol translator and being configured to translate data transferred between the central control unit and the local control unit.

8. The system (2) according to any one of claims 1-7, wherein said agricultural facility (20) is a first agricultural facility and said local control unit (50) is a first local control unit, wherein the system further comprises a second local control unit (50', 50") configured to be provided at a second agricultural facility (20', 20").

9. The system (20) according to claim 8, wherein the central control unit (10) is configured to receive computer software updates and forward said software updates to both the first and the second local control units (50, 50', 50").

10. A central control unit (10) for an agricultural facility (20, 20', 20") which has a setup (30) of a plurality of interconnected devices such as conveyors (32), elevators (34), distributors (36), containers (38, 40), etc., which form a plurality of different transportation paths for harvested materials such as grains,
wherein the central control unit is configured to be provided remotely from the agricultural facility and is configured to
∘ receive and store device input data representative of the devices in said setup,
∘ receive and store connection input data for each individual device, representative of with which other device or devices said individual device is in direct transport-wise communication, and
∘ calculate, based on the received device input data and the received connection input data, all the transportation paths that are possible to achieve with the current setup of said plurality of interconnected devices, and transmit transportation path data representative of said calculated transportation paths to a local control unit (50, 50', 50") which is provided at the agricultural facility.

11. A method performed by a central control unit (10) for use with respect to an agricultural facility (20, 20', 20") which has a setup (30) of a plurality of interconnected devices such as conveyors (32), elevators (34), distributors (36), containers (38, 40), etc., which form a plurality of different transportation paths for harvested materials such as grains, the method comprising, remotely from the agricultural facility,
∘ receiving and storing device input data representative of the devices in said setup, and
∘ receiving and storing connection input data for each individual device, representative of with which other device or devices said individual device is in direct transport-wise communication,
∘ calculating, based on the received device input data and the received connection input data, all the transportation paths that are possible to achieve with the current setup of said plurality of interconnected devices, and transmitting transportation path data representative of said calculated transportation paths to a local control unit (50, 50', 50") which is provided at the agricultural facility.

12. A local control unit (50, 50', 50") for an agricultural facility (20, 20', 20") which has a setup (30) of a plurality of interconnected devices such as conveyors (32), elevators (34), distributors (36), containers (38, 40), etc., which form a plurality of different transportation paths for harvested materials such as grains,
wherein the local control unit (50, 50', 50") is configured to be provided at the agricultural facility and is configured to:
∘ receive transportation path data representative of all transportation paths that are possible to achieve with the current setup of said plurality of interconnected devices,
∘ receive user-selection data including information about a selected starting device and a selected destination device of said plurality of interconnected devices,
∘ select, based on said transportation path data, one or more transportation paths that connect the selected starting device with the selected destination device for enabling transportation of harvested material from the selected starting device to the selected destination device, and
∘ send instructions to at least some of the devices that form part of the selected transportation path(s), so that a transportation process is initiated and carried out.

13. A method performed by a local control unit (50, 50', 50") for use with respect an agricultural facility (20, 20', 20") which has a setup (30) of a plurality of interconnected devices such as conveyors (32), elevators (34), distributors (36), containers (38, 40), etc., which form a plurality of different transportation paths for harvested materials such as grains, the method comprising:
∘ receiving transportation path data representative of all transportation paths that are possible to achieve with the current setup of said plurality of interconnected devices,
∘ receiving user-selection data including information about a selected starting device and a selected destination device of said plurality of interconnected devices,
∘ selecting, based on said transportation path data, one or more transportation paths that connect the selected starting device with the selected destination device for enabling transportation of harvested material from the selected starting device to the selected destination device, and
∘ sending instructions to at least some of the devices that form part of the selected transportation path(s), so that a transportation process is initiated and carried out.
